# EUROPEAN PATENT APPLICATION

(11) **EP 0 921 411 A2**
(43) Date of publication of application: **09.06.1999**
(21) Application number: 98307660.5
(22) Date of filing: 22.09.1998
(51) Int. Cl.: G01S 5/14

(54) **Monitoring system for boats**

(30) Priority: 05.12.1997 JP 33606397; 05.12.1997 JP 33609597
(71) Applicant: HINO JIDOSHA KOGYO KABUSHIKI KAISHA, Hino-shi Tokyo 191 (JP)
(72) Inventor: Niimura, Shunji, Hino-shi, Tokyo 191 (JP); Endo, Makoto, Hino-shi, Tokyo 191 (JP); Otani, Tetsuya, Hino-shi, Tokyo 191 (JP)
(74) Representative: Skone James, Robert Edmund

(57) **Abstract**

A shipboard terminal (1) is provided on each of a plurality of boats. This shipboard terminal collects the outputs of a plurality of sensors (3) which detect the state of the boat's engine, plus the output of the GPS unit carried on the board. It periodically compares the outputs of this plurality of sensors with their pre-recorded normal ranges, and displays an alarm when a normal range is exceeded. It automatically transmits to a shore terminal (2), via a portable phone network, the data output from the plurality of sensors and the positions data output by the GPS unit, during each communication time which has been allocated to the boat in accordance with time data contained in the output of the GPS unit. The shore terminal (2) receives this data via the public switched telephone network, and records it. This system facilitates the monitoring, via software, of the state of small leisure craft or coastal fishing boats not exceeding several tens of tons, such boats being operated by crews with little knowledge or experience of marine engines. It thereby promotes the safe operation of such boats.

## Description

The present invention relates to a system for monitoring, at a monitoring station provided on land, data relating to the state of the engine and the position of small leisure craft and coastal fishing boats.

It is easy to acquire a boat operating license, and there is no legal requirement that there be an engineer on each boat. Boat's engines have improved and engine breakdown has become extremely rare. As a result, captains (or skippers) now have little knowledge concerning abnormal engine conditions and little experience of coping with such conditions. Although the likelihood of engine breakdown has become small, if an engine does fail while at sea, this can still seriously jeopardize the safety of the boat. At sea it is impossible to obtain help from someone else if the engine breaks down, and the captain must deal with the situation entirely by himself.

The captain of a small leisure craft or coastal fishing boat generally does not have the skill to repair an engine at sea. Moreover, boats carry hardly any equipment for such seagoing repairs. Hence if the engine develops a minor fault during a voyage, the captain has to discover and acknowledge this in good time and then operate the boat in a way that will prevent the minor trouble becoming worse and leading to engine failure.

Japanese Patent Application Publication No. 9-226688 discloses a radio communications system whereby, when there is no engineer on board or when the engineer has little experience, data relating to the ship's engine during a voyage are measured by sensors and transmitted to a base station on land. This publication discloses that sensor outputs relating to the engine are connected to a computer carried on the ship, this computer being fitted with a communication device, whereby the sensor output data are transmitted to land using a ship telephone channel. A computer is provided on land, and the transmitted data are input to this computer and analyzed. The result is transmitted back to the ship using a ship telephone channel. Examination of the description given in this publication shows that the system disclosed therein is designed for use by coastal vessels of 500 to 2000 tons. This publication also notes that there are various obstacles to equipping this class of ship with an inference engine and that doing so is economically burdensome.

In accordance with one aspect of the present invention, a monitoring system for boats is characterized in that it comprises shipboard terminals provided on a plurality of respective boats and one fixed shore terminal; wherein
each shipboard terminal comprises: means for collecting the outputs of a plurality of sensors which detect the state of the boat's engine, and the output of a GPS unit carried on that boat; storage means in which the normal ranges of outputs of said plurality of sensors are recorded; logic means for periodically comparing the output of the sensors with the normal ranges recorded in the storage means; display means for displaying an alarm in the boat's cockpit or wheelhouse when the output of a sensor exceeds the normal range; and communication means which, at each communication time allocated to the boat in question in accordance with time data contained in the GPS output, automatically transmits data comprising at least some of the outputs of the aforementioned plurality of sensors, plus position data output by the GPS, to the aforementioned shore terminal via a land portable phone network; and wherein
the shore terminal comprises means for automatically receiving, recording and displaying data arriving from the aforementioned shipboard terminal via the public switched telephone network.

In accordance with a second aspect of the present invention, we provide a machine readable recording medium on which is recorded logic software which collects the outputs of the plurality of sensors which detect the state of the boat's engine, and the output of a GPS unit carried on that boat; periodically compares the outputs of this plurality of sensors with their recorded normal ranges; outputs an alarm when a normal range is exceeded; and at each communication time allocated to the boat in question in accordance with time data contained in the GPS output, automatically seizes a portable phone channel and transmits data comprising at least some of the outputs of the plurality of sensors, plus position data output by the GPS, to the shore terminal on land.

The invention relates to a system wherein a shore terminal comprising computer equipment is installed at a marina or a fisheries association to which a large number of boats belong; each boat is equipped with a shipboard terminal comprising a small computer; and connections are established between these shipboard terminals and the shore terminal via channels designated for the portable phones commonly used on land, and via the ordinary circuits of the public switched telephone network. The present invention also relates to software installed on a personal computer provided on a boat.

The prior art disclosed in the aforementioned publication does not contain the technical idea of evaluating engine-related data by means of a computer installed on the ship, nor does it disclose any technical ideas relating to control procedures for preventing congestion in communications between ships and a monitoring station, which can happen when a single monitoring station controls a large number of ships. Again, the aforementioned prior art does not contain any technical ideas relating to a procedure which, when there is an emergency situation regarding the engine of a particular ship, gives precedence to dealing with that emergency. Further, because the aforementioned prior art does not contain the idea of making parallel use of the Global Positioning System (GPS: a system for determining position anywhere on earth using satellites), it does not consider a ship's position data or accurate time data.

The captain of a small leisure craft or coastal fishing boat will have far less knowledge and experience of marine engines than the captain of a 500-2000 ton class coastal vessel, who holds a certificate of competence in seamanship. Moreover, there are far more small boats than coastal vessels of the aforementioned class, and if these boats were to perform engine monitoring by a radio communications system of the sort described above, then the number of vessels being controlled by a single monitoring station would be very large. In addition, not every boat is equipped with a ship radiotelephone.

One way of connecting a shore terminal to shipboard equipment by a radio channel would be to design a special (dedicated) radio channel and to construct facilities to utilize it (radio stations, etc.). However, in this case a radio station license and a radio operator's certificate would be required. Because such a license and certificate would be for this particular application only, such a system would not be likely to become generally popular.

The possibility of renting a boat for leisure purposes, so that many people are able to use the boat in addition to the boat's owner, introduces a further concern regarding safety, and is another reason why such a system will not become popular.

Now, recent years have witnessed remarkable reductions in the size of computers, and small portable models have been developed. Small computers of this sort can be used on a boat. Additionally, in recent years, the portable phone network has extended to coastal cities. Trials of an 800 MHz portable phone network in coastal cities in Japan have shown that it can be fully utilized even out at sea to a distance of about 20 km from the coast. A portable phone operating in the 800 MHz band can function using a small battery and can be operated stably even on a boat.

The present invention provides a monitoring system which supports the safe operation of small leisure craft or coastal fishing boats of up to several tens of tons. The invention also provides a support system whereby a boat can be operated safely even by someone with little experience of marine engines. The invention promotes the use of boats for leisure purposes by supporting their safe operation using computers. This invention enables the management of the safety aspects of marines to be rationalized. Furthermore, neither a radio station license nor a radio operator's certificate is required. The remote monitoring system is easy to operate and is based on a radio communication system. The present invention also provides software for installing on a personal computer of a monitoring system which supports the safe operation of small leisure craft or coastal fishing boats of up to several tens of tons. The software can be for use in a support system whereby a boat can be operated safely even by someone with little experience of marine engines. In the present invention, software can be installed on a personal computer of a remote monitoring system for which neither a radio station license nor a radio operator's certificate is required, and which is easy to operate and which is based on a radio communications system.

A first distinguishing feature of the present invention is that it supports the safe operation of boats by: installing a shore terminal comprising a computer at a marina to which a large number of small leisure craft belong, or at a fishing port to which coastal fishing boats belong; equipping each of the boats in question with a shipboard terminal comprising a small computer; connecting the shore terminal with the shipboard terminals by means of commonly-used portable phone channels and the public switched telephone network; and exchanging communications regarding the state of the engine and the boat.

The shipboard terminal preferably comprises means which, at a communication time allocated, after the boat's engine has been started, in accordance with time data contained in the GPS output, automatically transmits data comprising at least some of the plurality of sensor outputs, plus position data output by the GPS, to the shore terminal via the aforementioned portable phone network. The allocated communication time is preferably determined as follows. Namely, using a standard time derived from time data contained in the GPS output as the starting point, a time interval of T minus k minutes is divided into n equal parts and the resulting time intervals (t₁, t₂, t₃, ..., tₙ) are allocated to respective boats. The time interval of k minutes is a specific time interval during which engine start-up data can be transmitted. The shore terminal preferably comprises means which, having received a transmission addressed to itself from the shipboard terminal of a given boat during an aforementioned specific time interval after that boat's engine has been started, allocates a communication time for that boat; and means for transmitting this communication time to the shipboard terminal of the boat in question. The shipboard terminal, which receives the transmission of this communication time, preferably comprises means which automatically holds this communication time in the shipboard terminal until the boat's engine is stopped. The aforementioned specific time interval is preferably distributed over the time interval of T minutes.

The shipboard terminal preferably further comprises means which, when the aforementioned alarm has been displayed, automatically uses an emergency telephone number to transmit to the shore terminal, via the portable phone network, data comprising at least some of the plurality of sensor outputs, irrespective of the communication time which has been allocated. The shore terminal preferably further comprises: means which acquires the GPS output; storage means in which are recorded the normal ranges of the sensor outputs for a plurality of boat types; means which evaluates the received sensor outputs by referring, in accordance with the type of boat in question, to the recorded normal range data, and means which displays the received sensor outputs along with their evaluation.

Each of the shipboard terminals provided in the plurality of boats obtains the engine state as detected by the plurality of sensors, acquires the GPS output from satellites, and periodically compares the collected sensor outputs with the normal ranges which have been recorded for them. When this comparison shows that a sensor output exceeds its normal range, the shipboard terminal displays an alarm in the boat's cockpit or wheelhouse. Simultaneously, in each communication time allocated to the boat in question in accordance with time data contained in the GPS output, the shipboard terminal automatically transmits data comprising at least some of the plurality of sensor outputs, plus position data contained in the GPS output, to the shore terminal on land, establishing a communication channel via the land portable phone network. The shore terminal receives data from this shipboard terminal via the public switched telephone network, records its content, and also displays it on a display system.

The data comprising at least some of the plurality of sensor outputs and the GPS-derived position data are automatically transmitted from the shipboard terminal to the shore terminal via the portable phone network. This transmission takes place during the communication time which was allocated, after the boat's engine was started, in accordance with the time data contained in the GPS output.

The communication time is determined as follows. Namely, using a standard time derived from time data contained in the GPS output as the starting point, a time interval of T minutes (for example, 30 minutes) minus k minutes (for example, 3 minutes) is divided into n equal parts, giving time intervals t₁, t₂, t₃, ..., tₙ. Each of these time intervals is allocated to a respective boat as that boat's own communication time. The time interval of k minutes is used as a specific time interval during which any boat can transmit engine start-up data. This specific time interval can be distributed within the time interval of T minutes. For example, a specific time interval of 1 minute can be set every 10 minutes, and the engine start-up data and other emergency data can be transmitted within this specific time interval of 1 minute. A boat's engine is started up when the user deems it necessary, and this time cannot be predicted. It follows that the engine start-up time cannot be made to coincide with the specific time interval. However, if the specific time interval is distributed over the time interval T at for example 10 minute intervals, the engine start-up time can be transmitted with a maximum delay of 10 minutes. If the specific time interval becomes full to capacity and cannot be used, engine start-up data can be transmitted using another telephone number provided on a shore terminal channel.

When the shore terminal receives a transmission addressed to itself from the shipboard terminal of a given boat during a specific time interval after engine start-up, it allocates a communication time to that boat and transmits this allocated communication time to the shipboard terminal of that boat.

When the shipboard terminal receives this communication time, it maintains it as the communication time assigned to itself and communicates data on this basis until the boat's engine is stopped.

When an alarm has been displayed due to a sensor output exceeding its normal range, the shipboard terminal automatically uses an emergency telephone number to transmit to the shore terminal, via the portable phone network, data comprising at least some of the plurality of sensor outputs, irrespective of the communication time which has been allocated.

The shore terminal evaluates any sensor output received from a shipboard terminal by referring, in accordance with the type of boat in question, to the normal ranges of sensor outputs which have been recorded in advance, and displays the received sensor output along with its evaluation.

Thus, by periodically detecting the state of the engine from a plurality of sensor outputs, comparing each of these outputs with its normal range, and automatically displaying an alarm in the boat's cockpit or wheelhouse if an output exceeds its normal range, the need to deal with a situation which has occurred can be brought rapidly to a captain's attention. As a result, the safe operation of small leisure craft or coastal fishing boats of no more than several tens of tons is given excellent support, since such boats are operated by crew with little knowledge or experience of marine engines.

This invention also promotes the use of small leisure craft and serves to rationalize the management of marinas. Moreover, because a land portable phone network and the public switched telephone network are utilized as the communication means, neither a radio station license nor a radio operator's certificate is required. Additionally, because the radio communication system used is simple to operate, the invention can be used in a wider range of applications.

A second aspect of this invention is that it supports the safe operation and maintenance management of a boat by: installing a software-based monitoring program in the personal computer of the shipboard terminal provided on the boat; connecting this shipboard terminal to the shore terminal by means of commonly-used portable phone channels and the public switched telephone network; and exchanging communications regarding the state of the engine and the state of the boat, these states having been detected in accordance with this monitoring program.

Preferably, the logic software stored on the recording medium automatically seizes a portable phone channel and transmits, to the shore terminal, data comprising at least some of the outputs of the plurality of sensors which detect the engine condition, plus position data output by the GPS unit, this data transmission occurring at a communication time allocated, after the boat's engine has been started, in accordance with time data contained in the GPS output. The allocated communication time is preferably determined as follows. Namely, using a standard time derived from time data contained in the GPS output as the starting point, a time interval of T minus k minutes is divided into n equal parts and the resulting time intervals (t₁, t₂, t₃, ..., tₙ) are allocated to respective boats. The time interval of k minutes is a specific time interval for transmission of data after engine start-up.

It is also preferable if, when the logic software recorded on the recording medium has received a communication time allocated in response to a previous transmission to the shore terminal during a specific time interval after the engine of the boat in question was started, said logic software automatically maintains this communication time until the boat's engine is stopped. It is also preferable if, when an alarm output has been generated, the logic software recorded on the recording medium automatically uses an emergency telephone number to transmit to the shore terminal, via the portable phone network, data comprising at least some of the plurality of sensor outputs, irrespective of the communication time which has been allocated.

Preferred embodiments of the present invention will be described in detail with reference to the accompanying drawings, wherein :

Fig. 1 is a block diagram showing the configuration of the main parts of an embodiment of this invention.

Fig. 2 shows the communication routes used in an embodiment of this invention.

Fig. 3 shows the overall configuration of a system in which an embodiment of this invention is used.

Fig. 4 shows an exhaust temperature conditions map for evaluating engine exhaust temperature in an embodiment of this invention.

Fig. 5(a) gives an example of the case when the exhaust temperature is normal in an embodiment of this invention, while Fig. 5(b) gives an example of the case when the exhaust temperature is abnormal.

Fig. 6 shows changes in exhaust temperature with time in an embodiment of this invention.

Fig. 7 shows a boost pressure conditions map for evaluating engine boost pressure in an embodiment of this invention.

Fig. 8 shows an engine cooling water temperature conditions map for evaluating engine cooling water temperature in an embodiment of this invention.

Fig. 9 shows a lubricating oil pressure conditions map for evaluating engine lubricating oil pressure in an embodiment of this invention.

Fig. 10 shows an abnormal acceleration map for evaluating abnormal acceleration and collision of a boat in an embodiment of this invention.

Fig. 11 shows a grounding map for evaluating whether a boat has grounded, according to an embodiment of this invention.

Fig. 12 shows a power supply voltage abnormality map for evaluating power supply voltage abnormalities in an embodiment of this invention.

Fig. 13 shows a clutch selection position map for evaluating abnormality of clutch selection position in an embodiment of this invention.

Fig. 14 shows a start-up abnormality map for evaluating start-up abnormalities in an embodiment of this invention.

Fig. 15 shows an engine speed abnormality map for evaluating engine abnormality in an embodiment of this invention.

Fig. 16 shows a clutch position abnormality map for evaluating clutch position abnormality in an embodiment of this invention.

Fig. 17 shows an engine room temperature abnormality map for evaluating engine room temperature abnormality in an embodiment of this invention.

Fig. 18 shows the file structure in an embodiment of this invention.

Fig. 19 serves to explain how files are compared in an embodiment of this invention.

Fig. 20 serves to explain the operation of the file comparison program in an embodiment of this invention.

Fig. 21 is a flowchart showing the operation of a shipboard terminal in an embodiment of this invention.

Fig. 22 is a flowchart showing the measurement processing performed by a shipboard terminal in an embodiment of this invention.

Fig. 23 is a flowchart showing the inference processing of switch data in an embodiment of this invention.

Fig. 24 is a flowchart showing the inference processing of measurement data in an embodiment of this invention.

Fig. 25 is a flowchart showing the diagnostic processing in an embodiment of this invention.

Fig. 26 is a flowchart showing the display processing in an embodiment of this invention.

Fig. 27 is a flowchart showing the communications processing in an embodiment of this invention.

Fig. 28 gives an example of the transmission timing of shipboard terminals in an embodiment of this invention.

Fig. 29 gives an example of the arrangement of the specific time intervals in an embodiment of this invention.

Fig. 30 is a flowchart of data reception by a shore terminal in an embodiment of this invention.

Fig. 31 is a flowchart showing the allocation of communication times to shipboard terminals by a shore terminal in an embodiment of this invention.

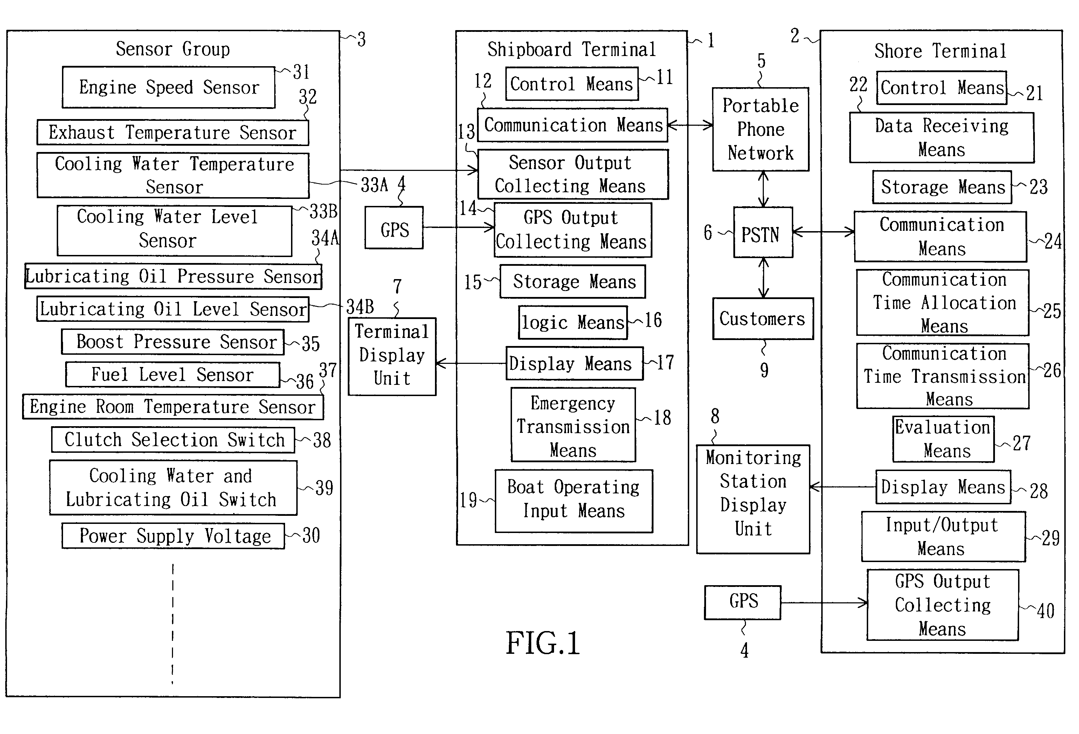

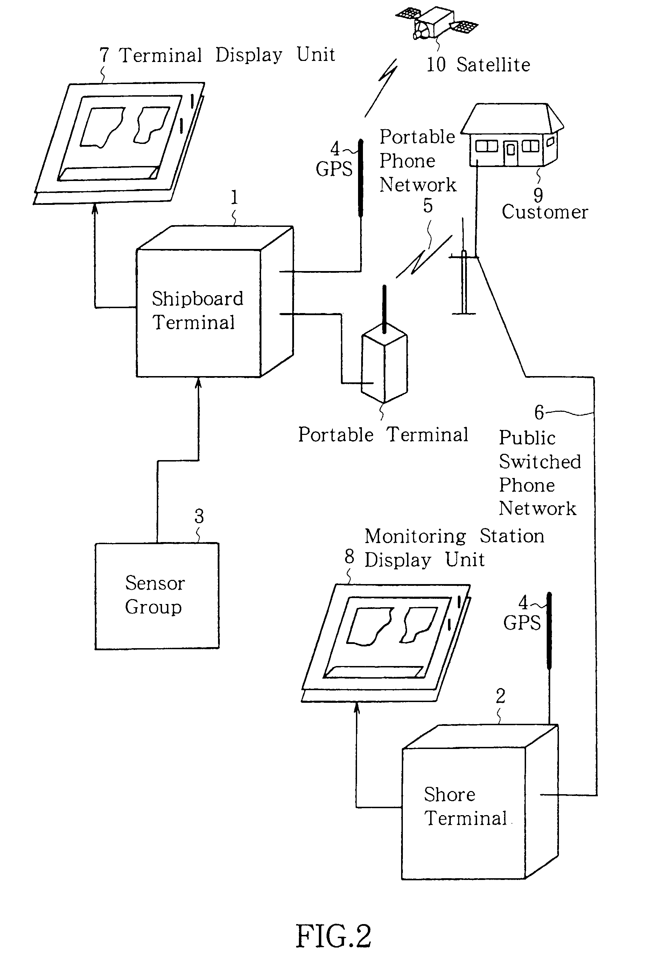

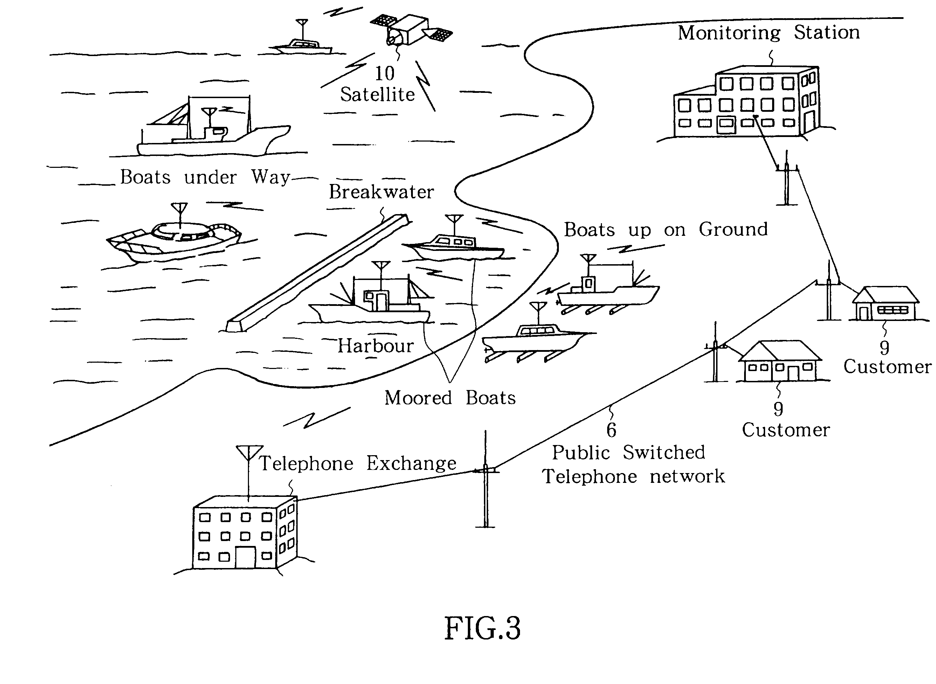

Embodiments of this invention will now be described with reference to the drawings. Fig. 1 is a block diagram showing the configuration of the main parts of an embodiment of this invention. Fig. 2 shows the communication routes used in an embodiment of this invention. Fig. 3 shows the overall configuration of a system in which an embodiment of this invention is used.

A monitoring system according to this embodiment comprises a shipboard terminal 1 provided on each of a plurality of boats such as leisure craft or fishing boats, and a shore terminal 2 provided at a monitoring station on land. Sensor group 3 is connected to shipboard terminal 1, and shipboard terminal 1 is connected to shore terminal 2 via portable phone network 5 and public switched telephone network 6. Shore terminal 2 and customers 9 are connected via public switched telephone network 6.

Shipboard terminal 1 comprises: control means 11 for controlling each subsystem of the shipboard terminal; communication means 12 for communicating with shore terminal 2; sensor output collecting means 13 which collects the plurality of outputs of sensor group 3 for detecting the state of the boat's engine; GPS output collecting means 14 which collects the output of GPS unit 4 which is carried on the boat and which determines the boat's position by means of satellites 10; storage means 15 in which the normal ranges of the plurality of outputs of sensor group 3 are recorded; logic means 16 which periodically compares the outputs of sensor group 3 with the normal ranges recorded in storage means 15; display means 17 which displays an alarm on terminal display unit 7 provided in the boat's cockpit or wheelhouse when an output of sensor group 3 exceeds the normal range; emergency transmission means 18 which, when an alarm has been displayed, irrespective of the aforementioned allocated transmission time, automatically uses an emergency telephone number to transmit, to shore terminal 2 via portable phone network 5, data comprising at least some of the plurality of outputs of sensor group 3; and boat operating input means 19 to which the boat operating inputs are sent.

Communication means 12 comprises means which, at each communication time allocated to the boat in question in accordance with time data contained in the output of GPS unit 4, automatically transmits, to shore terminal 2 via land portable phone network 5, data comprising at least some of the plurality of outputs of sensor group 3, plus position data output by GPS unit 4; and means which, at a communication time which has been allocated, after the boat's engine has been started, in accordance with time data contained in the output of GPS unit 4, automatically transmits, to shore terminal 2 via portable phone network 5, data comprising at least some of the plurality of outputs of sensor group 3, plus position data output by GPS unit 4.

Storage means 15 comprises means which, when a communication time allocated by shore terminal 2 has been received, automatically holds this communication time until the boat's engine is stopped.

The allocated communication time is determined as follows. Namely, using a standard time derived from time data contained in the output of GPS unit 4 as the starting point, a time interval of T minus k minutes is divided into n equal parts, and each of the resulting time intervals t₁, t₂, t₃, ..., tₙ is allocated to a respective boat. The time interval of k minutes is used as a specific time interval for the transmission of engine start-up data. This specific time interval is arranged in distributed fashion within the time interval of T minutes.

Shore terminal 2 comprises: control means 21 for controlling each subsystem of the shore terminal; data receiving means 22 for automatically receiving data arriving from shipboard terminal 1 via public switched telephone network 6; storage means 23 for recording these data; display means 28 for displaying these data on monitoring station display unit 8; communication means 24 for communicating with shipboard terminal 1 via public switched telephone network 6; communication time allocation means 25 for allocating a communication time to a boat after receiving a transmission to shore terminal 2 from shipboard terminal 1 of that boat in the specific time interval for transmission of engine start-up data after the engine of that boat has been started; communication time transmission means 26 for transmitting this communication time to shipboard terminal 1 of the boat in question; and GPS output collecting means 40 which collects the time data contained in the GPS output.

The normal ranges of the outputs of sensor group 3 for a plurality of boat types are recorded in storage means 23. Shore terminal 2 further comprises evaluation means 27 for referring to records in storage means 23 in accordance with the type of boat in question and evaluating the received outputs of sensor group 3; display means 28 for displaying on monitoring station display unit 8 these received outputs of sensor group 3, together with their evaluation; and input/output means 29 for input and output operations.

Sensor group 3 comprises: engine speed sensor 31, exhaust temperature sensor 32, cooling water temperature sensor 33A, cooling water level sensor 33B, lubricating oil pressure sensor 34A, lubricating oil level sensor 34B, boost pressure sensor 35, fuel level sensor 36, engine room temperature sensor 37, clutch selection switch 38, cooling water and lubricating oil switch 39, power supply voltage 30, and any other sensors or switches deemed to be necessary.

As depicted in Fig. 3, whether a boat is under way, moored or brought up onto land, any boat on which shipboard terminal 1 has been provided is continuously monitored by shore terminal 2 of the monitoring station.

Monitoring software according to this invention is installed on a personal computer in shipboard terminal 1, and monitoring of a boat is automatically performed by means of this monitoring software.

Namely, shipboard terminal 1 collects the plurality of outputs of sensor group 3 which serves to detect the state of the boat's engine, and the output of GPS unit 4 carried on that boat; periodically compares the plurality of outputs of sensor group 3 with their recorded normal ranges; outputs an alarm if a normal range is exceeded; and at each communication time allocated to that boat in accordance with time data contained in the output of GPS unit 4, automatically seizes a portable phone channel and transmits, to shore terminal 2 on land, data comprising at least some of the plurality of outputs of sensor group 3, plus position data output by GPS unit 4.

Shipboard terminal 1 also automatically seizes a portable phone channel and transmits, to shore terminal 2 on land, data comprising at least some of the outputs of the plurality of sensors which detect the state of the boat's engine, plus position data output by GPS unit 4, at a communication time allocated, after the engine has been started, in accordance with time data contained in the output of GPS unit 4.

The allocated communication time is determined as follows. Namely, using a standard time derived from time data contained in the output of GPS unit 4 as the starting point, a time interval of T minus k minutes is divided into n equal parts and each of the resulting time intervals (t₁, t₂, t₃, ..., tₙ) is allocated to a respective boat. The time interval of k minutes is a specific time interval for transmission of data after engine start-up.

When shipboard terminal 1 has received a communication time allocated in response to a previous transmission to shore terminal 2 on land during a specific time interval after that boat's engine was started, shipboard terminal 1 automatically holds this communication time until the boat's engine is stopped.

When an alarm output has been generated, shipboard terminal 1 automatically uses an emergency telephone number to transmit to shore terminal 2, via portable phone network 5, data comprising at least some of the plurality of outputs of sensor group 3, irrespective of the communication time which has been allocated.

The normal output range of each sensor of sensor group 3 is recorded as a map in storage means 15 of shipboard terminal 1 and in storage means 23 of shore terminal 2. Examples of each type of map will now be explained.

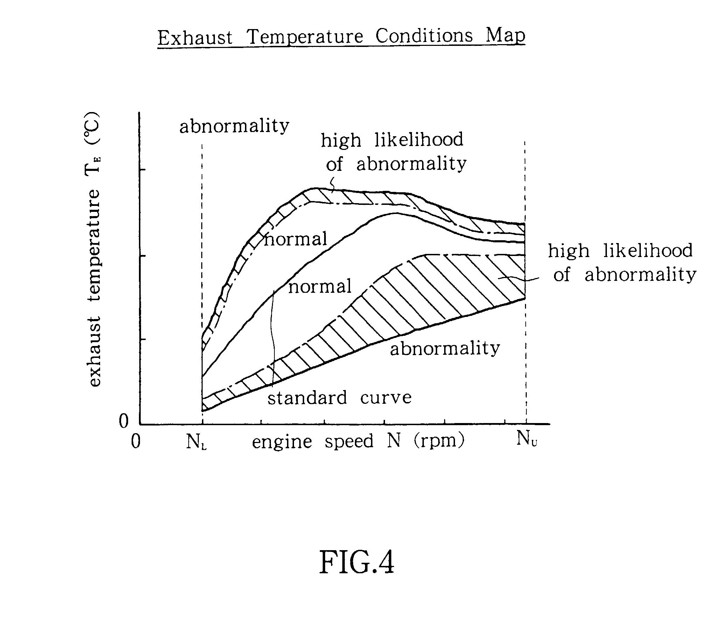

Fig. 4 shows an exhaust temperature conditions map for evaluating engine exhaust temperature in an embodiment of this invention. This map shows exhaust temperature (T_{E}) against engine speed (N), plus a predetermined lower limit (N_{L}) and upper limit (N_{U}) for engine speed while the boat is under way. A standard curve is set for exhaust temperature (T_{E}) within these limits, plus normal regions, regions of high likelihood of abnormality, and regions of abnormality.

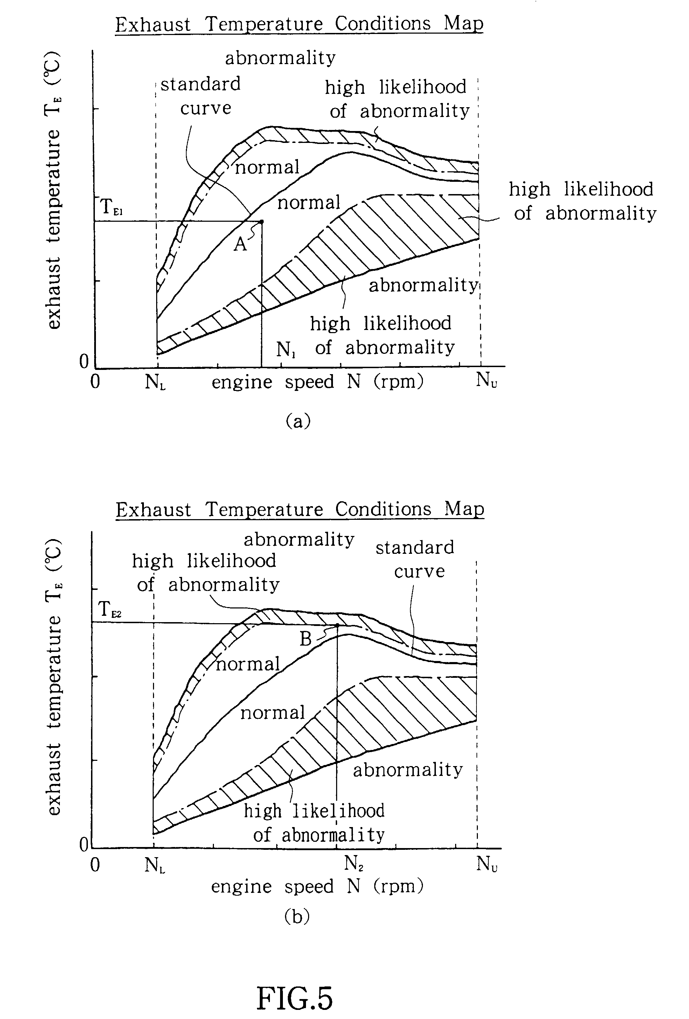

Let it be assumed that, as shown in Fig. 5(a), the exhaust temperature is T_{E1} when the detected engine speed is N₁, so that these values have associated coordinate point A on the map. Then, because this coordinate point A is in a normal region, the engine exhaust temperature is evaluated as being normal. Alternatively, let it be assumed that, as shown in Fig. 5(b), the exhaust temperature is T_{E2} when the detected engine speed is N₂, so that these values have associated coordinate point B on the map. Then, because this coordinate point B is near a region in which there is a high likelihood of abnormality, the engine exhaust temperature is evaluated as being abnormal. Exhaust temperature T_{E} is thus evaluated as being abnormal or otherwise in accordance with which region exhaust temperature T_{E} is in at a given engine speed N.

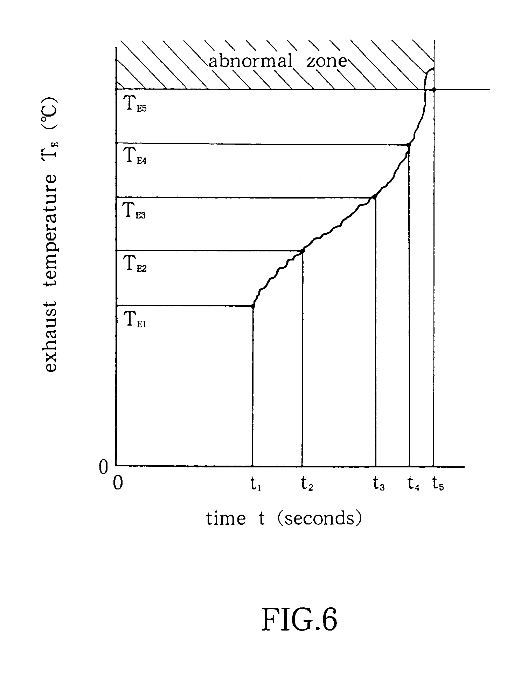

Fig. 6 shows changes in exhaust temperature with time in an embodiment of this invention. This figure plots exhaust temperatures T_{E1}, T_{E2}, T_{E3}, ... for a series of times t₁, t₂, t₃, ... set at given time intervals. If this plot has at least 3 points, these points can be used to fit a curve by the least squares method, whereby future changes in the data can be predicted. If these predicted points approach a region of abnormality on the map shown in Fig. 4, the evaluation is that there is a likelihood of abnormality.

A specific example of an exhaust temperature conditions map is given below in Table 1.

**Table 1**

| | | engine speed (rpm) | | | | | |
|---|---|---|---|---|---|---|---|
| | | 1500 | 1600 | 1800 | 2000 | 2200 | 2400 |
| exhaust temperature (°C) | 300 | C | C | C | D | D | D |
| | 320 | B | C | C | C | D | D |
| | 340 | B | B | C | C | C | C |
| | 360 | B | B | B | C | C | C |
| | 380 | B | B | B | B | C | C |
| | 400 | A | A | B | B | B | B |
| | 420 | B | B | A | A | B | B |
| | 440 | B | B | B | B | A | A |
| A: normal (standard curve value) | | | | | | | |
| B: from normal, approaching high likelihood of abnormality or breakdown | | | | | | | |
| C: from high likelihood of abnormality or breakdown, approaching abnormality or breakdown | | | | | | | |
| D: abnormality or breakdown | | | | | | | |

For example, although an exhaust temperature of 360°C at an engine speed of 1800 rpm is still normal, it is near a region of high likelihood of abnormality or breakdown, and a 20°C drop in temperature would result in an evaluation of high likelihood of abnormality or breakdown.

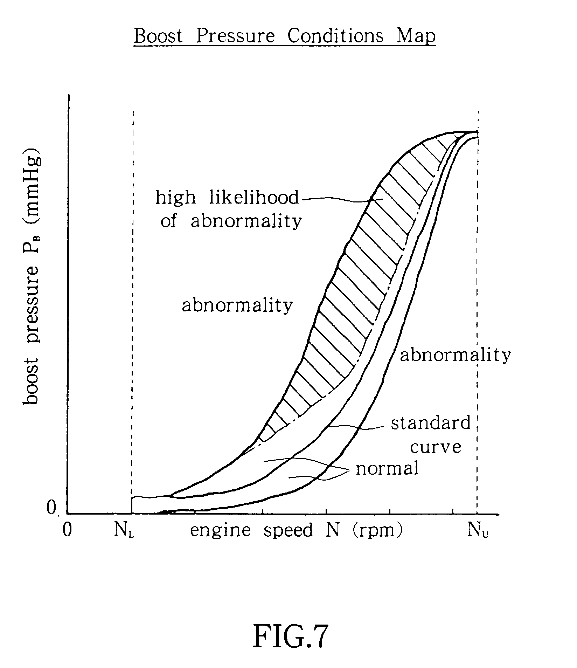

Fig. 7 shows a boost pressure conditions map for evaluating engine boost pressure in an embodiment of this invention. This map shows boost pressure (P_{B}) against engine speed (N), plus a predetermined lower limit (N_{L}) and upper limit (N_{U}) for engine speed while the boat is under way. A standard curve is set for boost pressure within these limits, plus normal regions, a region of high likelihood of abnormality, and regions of abnormality. Boost pressure can be evaluated as normal or abnormal by referring to this boost pressure conditions map.

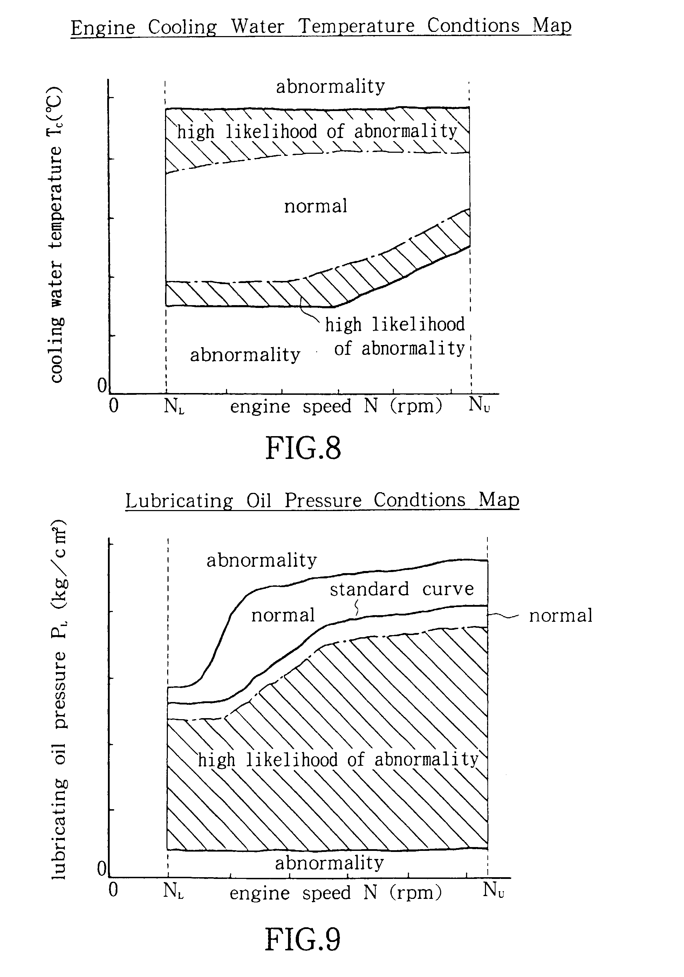

Fig. 8 shows an engine cooling water temperature conditions map for evaluating engine cooling water temperature in an embodiment of this invention. This map shows engine cooling water temperature (T_{C}) against engine speed (N), plus a predetermined lower limit (N_{L}) and upper limit (N_{U}) for engine speed while the boat is under way. A normal region, regions of high likelihood of abnormality, and regions of abnormality are set for engine cooling water temperature (T_{C}) within these limits. Engine cooling water temperature is evaluated as normal or abnormal by referring to this engine cooling water temperature conditions map.

Fig. 9 shows a lubricating oil pressure conditions map for evaluating engine lubricating oil pressure in an embodiment of this invention. This map shows lubricating oil pressure (P_{L}) against engine speed (N), plus a predetermined lower limit (N_{L}) and upper limit (N_{U}) for engine speed while the boat is under way. Normal regions, a region of high likelihood of abnormality, and regions of abnormality are set within these limits relative to a standard curve of lubricating oil pressure (P_{L}). Lubricating oil pressure is evaluated as normal or abnormal by referring to this lubricating oil pressure conditions map.

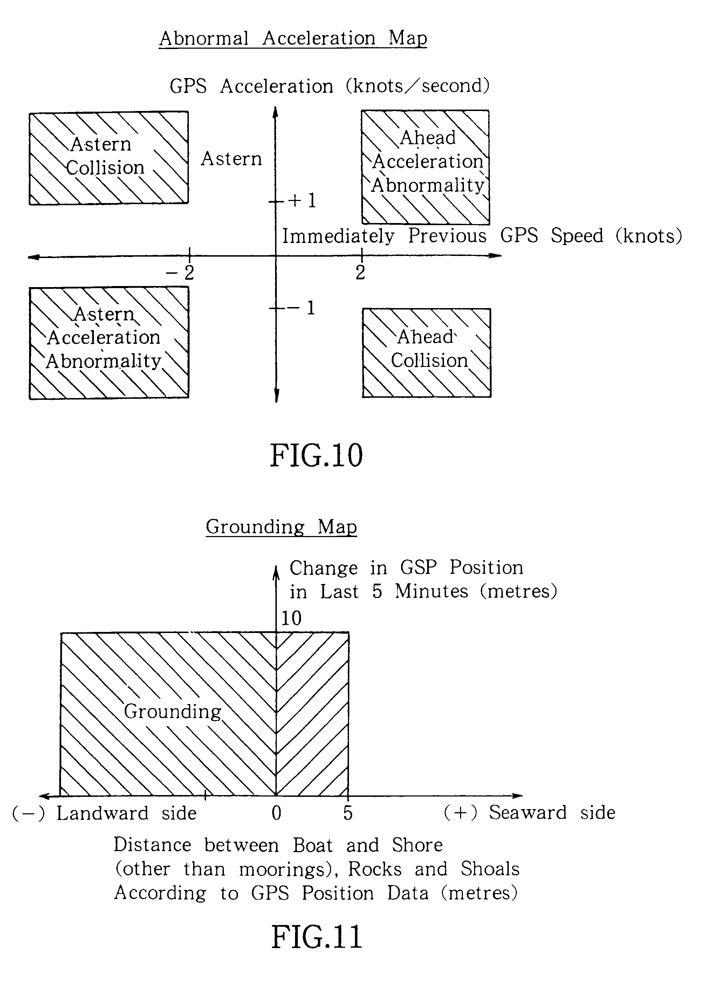

Fig. 10 shows an abnormal acceleration map for evaluating collision and abnormal acceleration of a boat in an embodiment of this invention. This map shows the boat's speed along the horizontal axis and its acceleration along the vertical axis, both as calculated from position data of GPS unit 4. Regions are set on the map for ahead and astern collision, and for ahead and astern abnormal acceleration.

If, when the boat is making headway and its acceleration is negative, its coordinate point on this map is in the region of ahead collision, the situation is evaluated as the boat having collided while making headway. On the other hand, if when the boat is backing and its acceleration is positive, its coordinate point on the map is in the region of astern collision, the situation is evaluated as the boat having collided while backing.

If, when the boat is making headway and its acceleration is positive, its coordinate on the map is in the region of ahead acceleration abnormality, the evaluation is that the boat has an abnormal ahead acceleration. On the other hand, if when the boat is backing and its acceleration is negative, its coordinate is in the region of abnormal astern acceleration, the evaluation is that the boat has an abnormal astern acceleration.

Fig. 11 shows a grounding map for evaluating whether a boat has grounded, according to an embodiment of this invention. On the horizontal axis this map shows the distance between the boat and the shore (other than to a mooring place), rocks and shoals, according to the GPS position data. On the vertical axis it shows the change in the boat's position over the last 5 minutes according to the GPS position data. In addition, a grounding region is defined on the map. If the distance between the boat and shore, rocks, shoals or breakwaters according to the electronic chart data is within a range established for the seaward side (e.g., 5 meters), and if the change in position over the last 5 minutes is within a preset distance (e.g., 10 meters) - in other words, if the boat's coordinates on the grounding map are within the shaded area - then it is decided that the boat has grounded

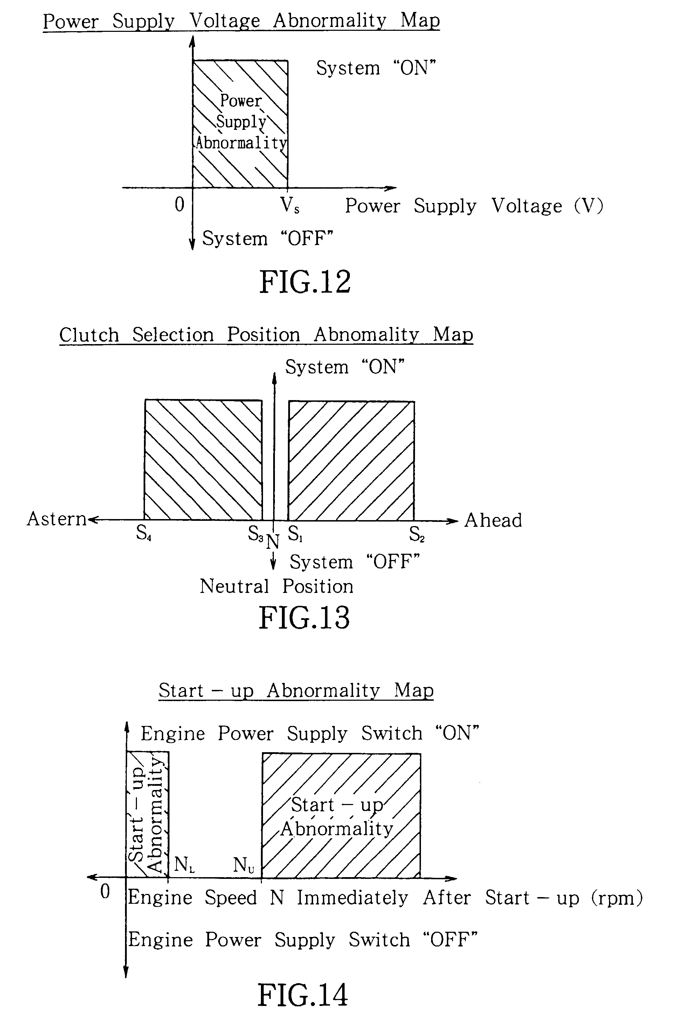

Fig. 12 shows a power supply voltage abnormality map for evaluating power supply voltage abnormalities in an embodiment of this invention. When the system is "ON " - in other words, when the engine is operating - and the power supply voltage is less than a prescribed value V_{S}, then it is decided that the power supply is abnormal.

A specific example of power supply voltage abnormality decisions is given in Table 2.

**Table 2**

| | | | | | | | |
|---|---|---|---|---|---|---|---|
| power supply voltage (V) | 8 | 9 | 10 | 11 | 12 | 13 | 14 |
| evaluation (supply on) | D | D | C | B | B | A | A |
| A: normal | | | | | | | |
| B: from normal, approaching high likelihood of fault | | | | | | | |
| C: high likelihood of abnormality or fault | | | | | | | |
| D: abnormality or fault | | | | | | | |

For example, although a power supply voltage of 11 V is still normal, a decrease of 1 V would result in its being evaluated as having a high likelihood of abnormality or fault.

Fig. 13 shows a clutch selection position abnormality map for evaluating abnormality of clutch selection position in an embodiment of the present invention. When the system is "ON" and the clutch position is between S₁ and S₂, as shown by the shaded area in the ahead direction, and when it is between S₃ and S₄, as shown by the shaded area in the astern direction, the clutch selection position is evaluated as being abnormal. In other words, abnormality of clutch selection position is detected before engine start-up (i.e., when the ignition is off). If the clutch selection position is displaced either forward or backward from the neutral position (marked N in Fig. 13) before the engine is started, a clutch selection position abnormality signal is transmitted. In this case, even if the ignition is turned on, the engine will not start. Although this interlock system is stipulated by law, the user frequently does not realize why the engine is not starting, and therefore an error indication can be displayed.

Fig. 14 shows a start-up abnormality map for evaluating start-up abnormalities in an embodiment of this invention. If the engine power supply switch is "ON" and the engine speed (N) immediately after the engine has started is at or below the lower limit N_{L} of the normal operating range (e. g., 200 rpm), or exceeds the upper limit N_{U} (e.g., 800 rpm), then it is decided that there is an abnormality.

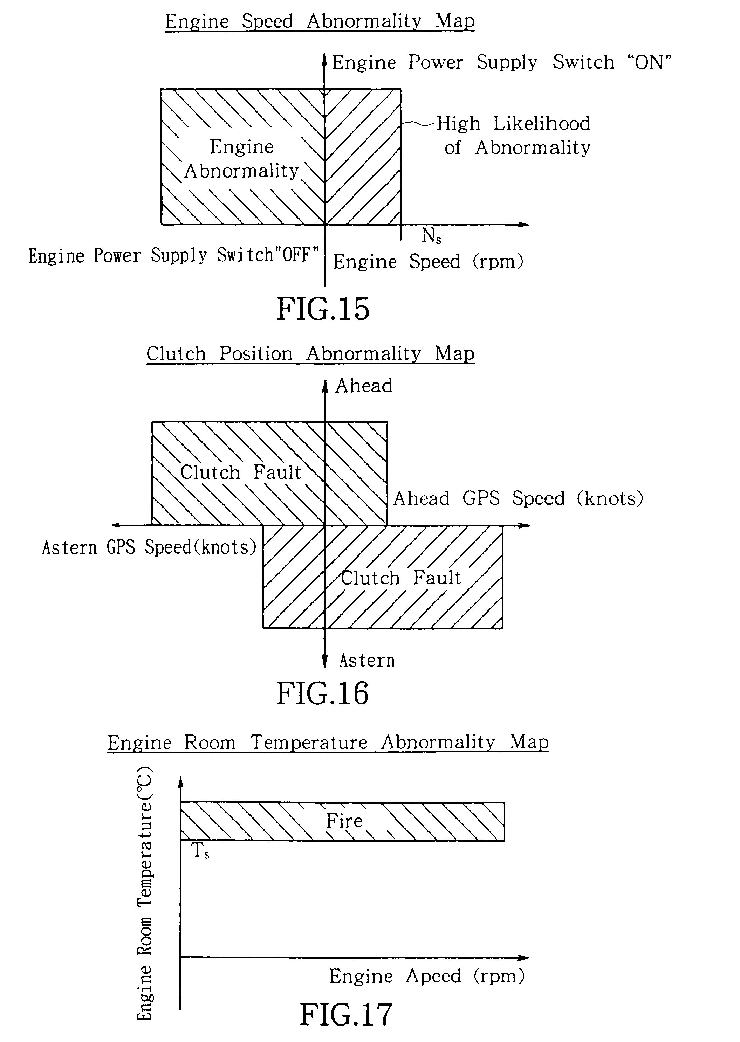

Fig. 15 shows an engine speed abnormality map for evaluating engine abnormality in an embodiment of this invention. If the engine power supply switch is "ON" and engine speed is below the "zero" position on the map, it is judged that the engine has not been deliberately stopped and instead has stopped for some other reason. It is therefore decided that an abnormality has occurred. If the engine has started but its speed remains at or below a prescribed value N_{S} (e.g., 500 rpm), it is also judged that an engine abnormality has occurred.

Fig. 16 shows a clutch position abnormality map for evaluating clutch position abnormality in an embodiment of this invention. If, while the clutch is in the ahead position, the GPS speed is 2 knots or less, it is judged that there is a clutch abnormality, since the GPS usually indicates a speed of 4 to 5 knots when the clutch is engaged. The same decision is made if, while the clutch is in the astern position, the astern speed shown by the GPS is 2 knots or less.

Fig. 17 shows an engine room temperature abnormality map for evaluating engine room temperature abnormality in an embodiment of this invention. If the temperature in the engine room reaches a prescribed value (T_{S}), irrespective of engine speed, then it is judged that afire has broken out.

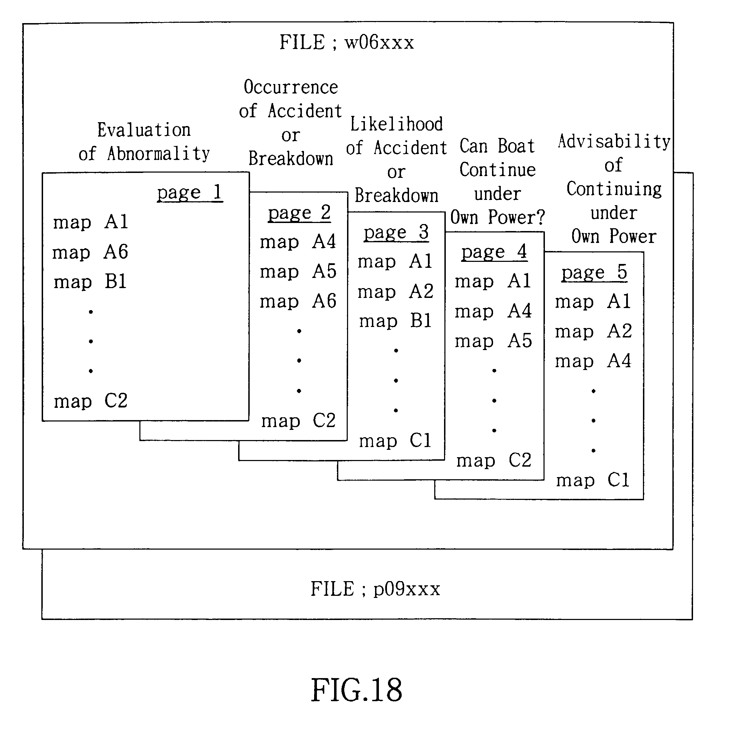

These maps are recorded and held as files. Fig. 18 shows the file structure employed in an embodiment of this invention. The maps are stored in five separate pages, each page being used for a different kind of evaluation. Page 1 is used for the evaluation of abnormality which was described above. Page 2 is used to decide whether an accident or a breakdown has occurred. Page 3 is used for deciding whether an accident or breakdown is likely. Page 4 is used for deciding whether a boat can continue under its own power, and Page 5 is used to decide whether it is advisable for the boat to continue. These five pages can be open at the same time for simultaneous reference. The files are arranged by engine type, and for a given boat a file is kept for the power train carried by that boat. Files for all boats are archived in storage means 23 of shore terminal 2 as reference data.

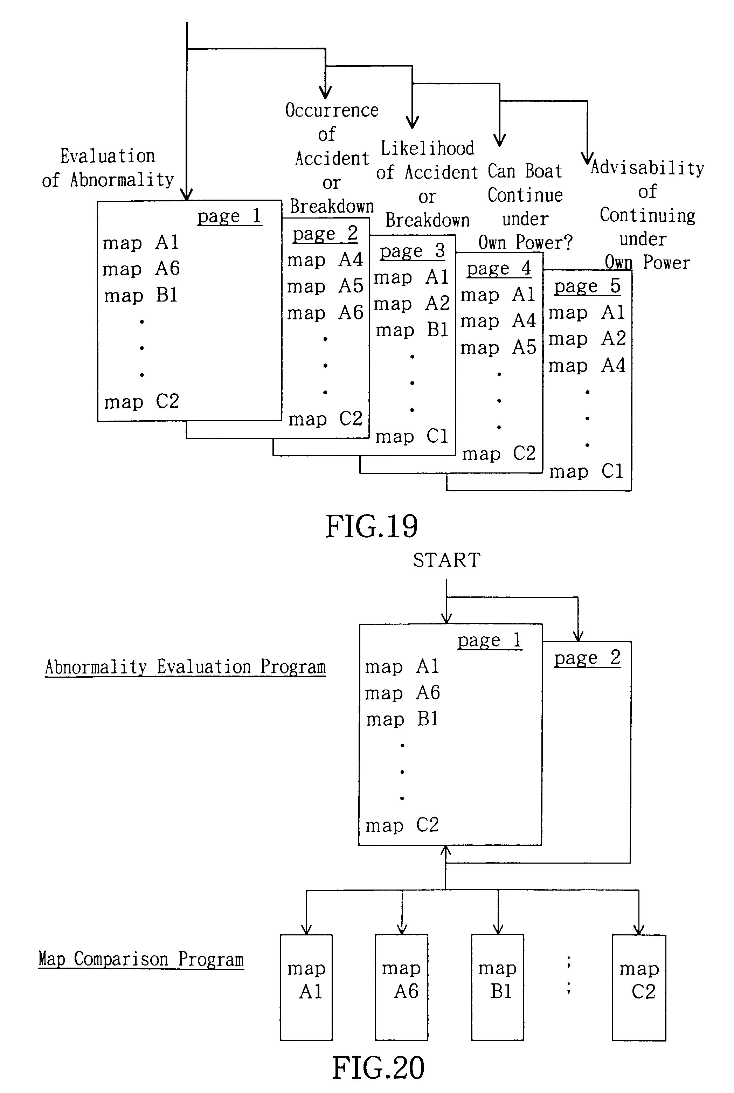

Fig. 19 serves to explain file comparison in an embodiment of this invention, while Fig. 20 serves to explain the operation of the file comparison program in this embodiment. File comparison is carried out by control means 11 in accordance with an overall control program. This overall program has a multitasking configuration, and control means 11 runs the individual time-shared tasks in parallel (in page units). Each task is static until a measurement data file is fetched as a message. When the file has been fetched, the task is run in parallel for those maps in that file for which the processing is required, and the results of each comparison are written to another file. A separate page unit program collects that file and evaluates it as the comparison results.

Thus, because the file comparison program is run in multitasking form in page or map units, even if one piece of data is missing and one program stops, the other programs can operate independently of this program and continue making evaluations.

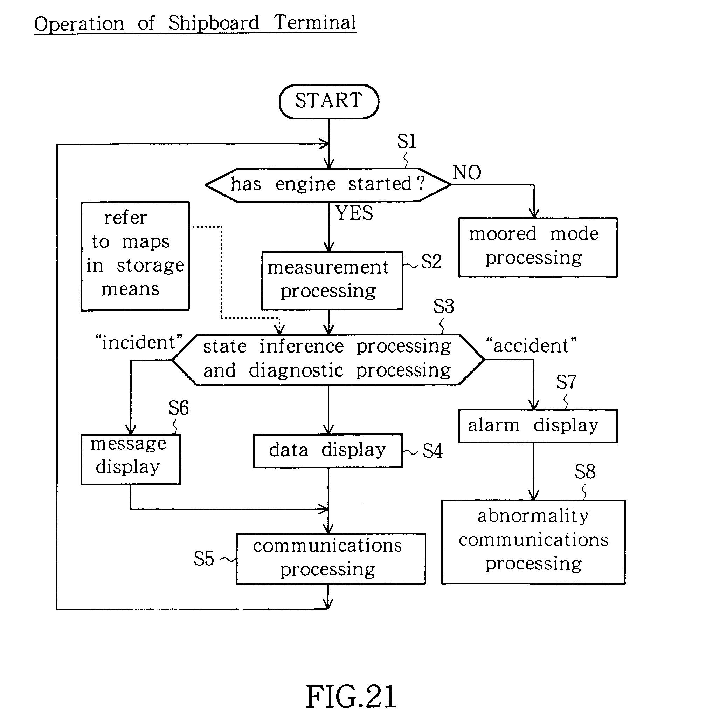

The operation of an embodiment of the invention thus constituted will now be explained. Fig. 21 is a flowchart showing the operation of a shipboard terminal in this embodiment. First of all, shipboard terminal 1 decides whether or not the engine has started. If the engine has not started, it sets the moored mode and switches over to another processing sequence. If the engine has started, it performs measurement processing.

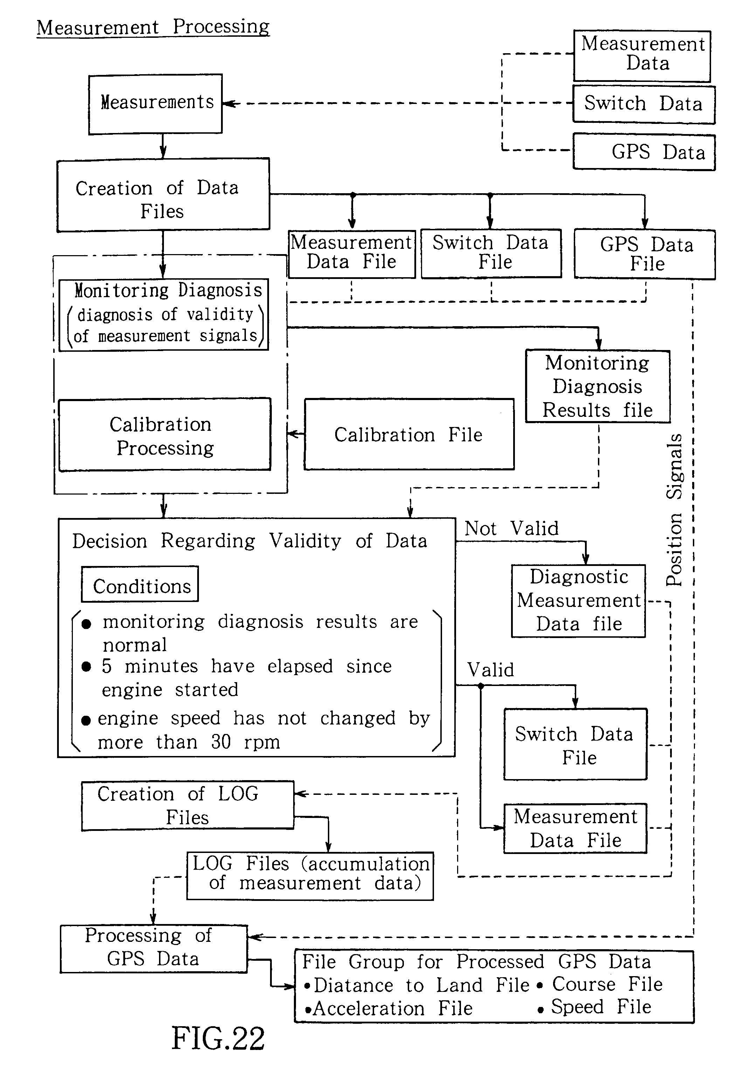

Fig. 22 is a flowchart showing the measurement processing performed by a shipboard terminal in an embodiment of this invention. In this measurement processing (labelled S2 in Fig. 21), the outputs of engine speed sensor 31, exhaust temperature sensor 32, cooling water temperature sensor 33A, cooling water level sensor 33B, lubricating oil pressure sensor 34A, lubricating oil level sensor 34B, boost pressure sensor 35, fuel level sensor 36, engine room temperature sensor 37, and of various other sensors, are collected as the measurement data by sensor output collecting means 13 shown in Fig. 1. At the same time, switch data relating to clutch selection switch 38, cooling water and lubricating oil switch 39, and other switches are also collected, together with power supply voltage 30. The output of GPS unit 4 is also collected, by GPS output collecting means 14.

Under normal conditions, when a boat is under way in or out of a harbor, GPS measurements are carried out over a period of 60 seconds every 30 minutes when the engine is stopped, and over a period of 60 seconds every 10 minutes when the engine is operating. If there is a possibility of some minor trouble, or if there is a high likelihood that an accident or breakdown will occur, the GPS measurements are made for 60 seconds every 10 minutes irrespective of whether the engine is operating or is stopped. If an accident or breakdown has occurred, continuous GPS measurements are made for 3 seconds every minute.

The collected measurement data, switch data and GPS data are respectively recorded in a measurement data file, a switch data file and a GPS data file provided in storage means 15. To confirm the validity of subsequent measurement signals, monitoring diagnosis is performed on the basis of these data. Data which is valid according to this monitoring diagnosis - namely, data which can be used for subsequent inferences, and which has been confirmed as being not greatly different from these recorded data - is then sent for calibration processing, which is carried out by referring to a calibration file.

After this processing, the data are recorded in a monitoring diagnosis results file provided in storage means 15. Next, it is decided whether or not the monitoring diagnosis results are normal, whether the data relate to a time at least five minutes after engine start-up, and whether the engine speed has changed by more than 30 rpm during the past five minutes. If these conditions are not met - in other words, if the data are not valid - they are recorded for diagnostic use in a diagnostic measurement data file. Valid data for which these conditions are met are recorded in the switch data file and the measurement data file as data for inference processing.

A LOG file is created as an accumulation of measurement data, using the data recorded in the diagnostic measurement data file, the switch data file and the measurement data file.

Meanwhile, the GPS data are processed and recorded in a distance to land file, a course file, an acceleration file and a speed file.

After this measurement processing, the data recorded in the switch data file and the measurement data file are subjected to state inference processing and diagnostic processing (S3 in Fig. 21).

This inference processing and diagnosis are executed by a program-controlled circuit on the basis of the measurement data, and the results are displayed on the shipboard terminal. Because the measurement data can also be transmitted to the shore terminal, the same inference processing and diagnosis can be carried out at the shore terminal. However, the results are displayed to the boat's captain and the final decision is made by the captain and not by a machine. If there is an experienced person at the monitoring station, the boat's captain can obtain advice by making a telephone call, but the final decision is still taken by the captain.

The state inference processing includes inferring the feasibility of the boat continuing its voyage, and the feasibility of it continuing under its own power.

Inference processing regarding the feasibility of the boat continuing its voyage is performed on the basis of the decision that there is no great likelihood of an accident or breakdown occurring. It involves collecting outputs from sensor group 3 and comparing these output values with the exhaust temperature conditions map, engine cooling water temperature conditions map, boost pressure conditions map, lubricating oil pressure conditions map, engine room temperature abnormality map, power supply voltage abnormality map, abnormal acceleration map, clutch selection position abnormality map and engine speed abnormality map held in the prescribed data files. Inferences by the processor are used to decide, on the basis of the results of these comparisons, whether or not continuing with the voyage will be problem free.

If the outputs collected from sensor group 3 are at the standard level, it is decided that the voyage can continue. If some of the outputs diverge from the standard level, monitoring is continued for 5 minutes and if the divergent sensor output or outputs return to the standard level, it is decided that the voyage can continue. If the voyage can continue, maintenance management data are collected and displayed on display means 17, and it is urged that maintenance be carried out in accordance with these maintenance management data. If it is judged that the voyage cannot continue, a telephone or other connection is made to the monitoring station and instructions for returning to port are requested.

The inference processing regarding the feasibility of the boat continuing under its own power is performed when an accident or breakdown has occurred, and involves collecting the outputs from sensor group 3 and comparing their values with the clutch selection position abnormality map, engine speed abnormality map, engine room temperature abnormality map, power supply voltage abnormality map, grounding map and abnormal acceleration map. The feasibility of the boat continuing under its own power is decided on the basis of the results of these comparisons.

If it is found that one or more of these conditions is abnormal and that this abnormality has lasted continuously for 10 minutes or more, it is judged that the boat cannot continue under its own power. In the case of a fire, after it has been decided that a fire has occurred, if this decision state continues for 3 minutes, it is judged that the boat cannot continue under its own power.

If it is decided that the boat can continue under its own power, instructions for returning to port are requested from the monitoring station. If it is decided that it cannot continue under its own power, then because fire, collision or grounding followed by flooding and sinking may have occurred, the boat's captain asks for assistance by a direct voice call to the monitoring station.

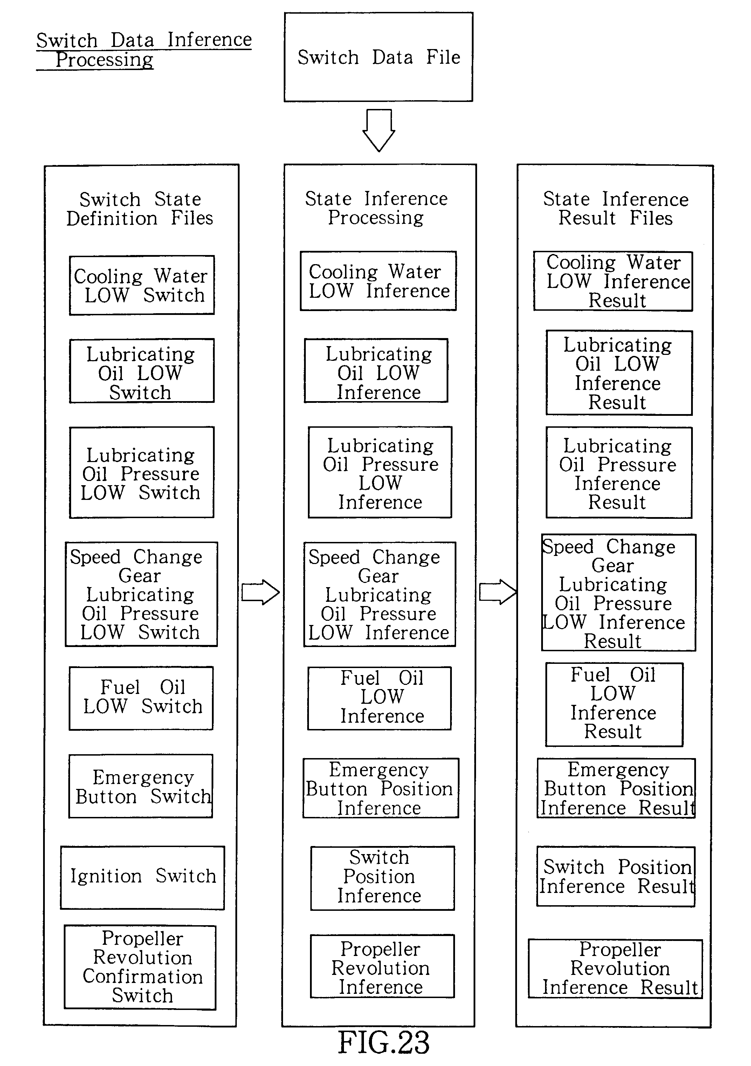

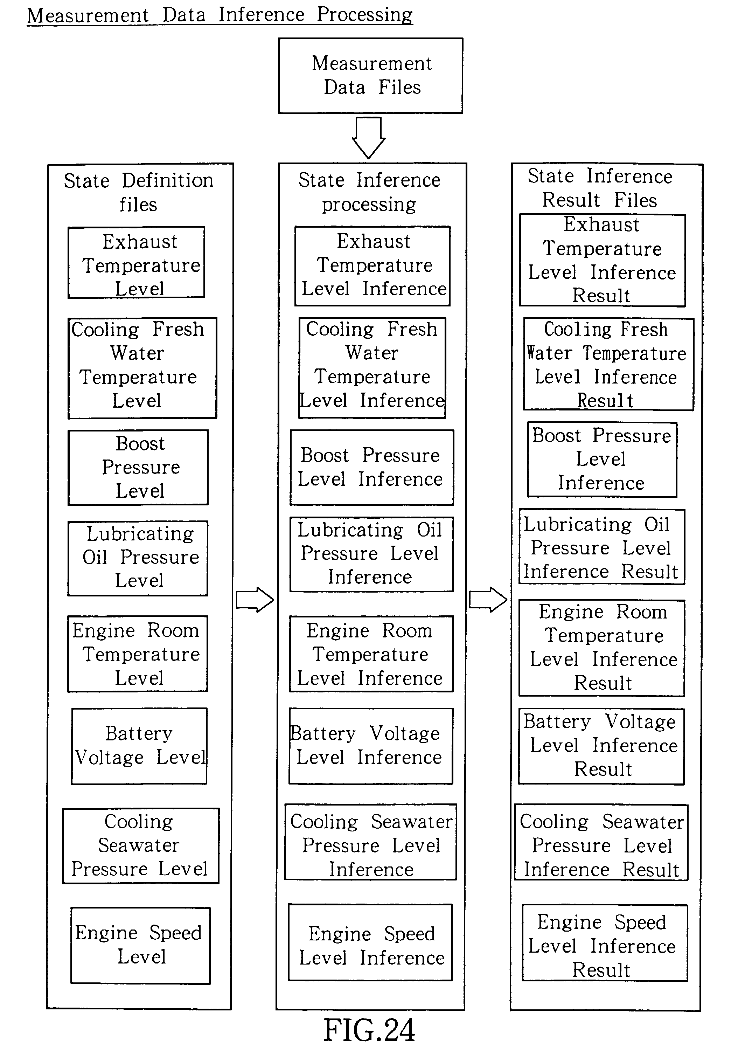

The inference processing of the switch data and measurement data will now be explained. Fig. 23 is a flowchart showing the inference processing of switch data in an embodiment of this invention. Fig. 24 is a flowchart showing the inference processing of measurement data in an embodiment of this invention. These figures give examples of the switch data and measurement data on which the inference processing is performed.

By way of example, in the inference processing of the switch data shown in Fig. 23, the state of the cooling water LOW switch which determines the LOW position of the cooling water, is defined in a file, and logic means 16 infers (decides) whether the cooling water is at the correct level. The result of this inference is recorded in a state inference result file, and simultaneously displayed on display means 17 and transmitted to shore terminal 2.

Again by way of example, in the measurement data inference processing shown in Fig. 24, exhaust temperature levels are defined in a definition file. Logic means 16 compares the measurement data with the exhaust temperature conditions map shown in Fig. 4 and makes an inference regarding the state of the exhaust temperature. In this example, if as shown in Fig. 5(a) the exhaust temperature (T_{E}) has map coordinate A at a certain engine speed (N), it is inferred that exhaust temperature is normal. On the other hand, if as shown in Fig. 5(b) the exhaust temperature has map coordinate B at a certain engine speed, it is inferred that it is abnormal. Analogous processing is applied to the other measurement data: they are compared with the respective maps shown in Fig. 6 to Fig. 17 and inferences made as regards the normality or abnormality of the parameter in question. If a parameter is judged to be abnormal, then the details involved determine whether an "accident" or an "incident" is diagnosed.

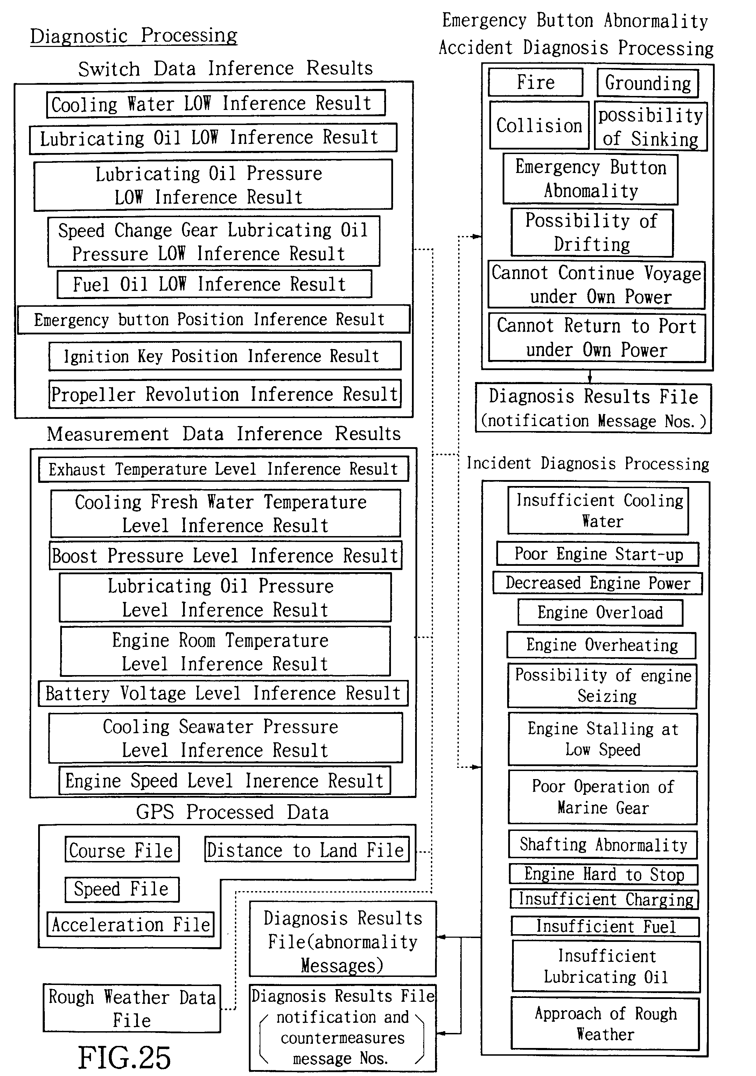

Fig. 25 is a flowchart showing the diagnostic processing in an embodiment of this invention. This processing takes the switch data inference results obtained by the switch data inference processing shown in Fig. 23, the measurement data inference results obtained by the measurement data inference processing shown in Fig. 24, the processed data which are output by the GPS, and any rough weather information, and produces a diagnosis. This can be that the situation is normal, or that an "accident" has occurred, or that an "incident" has occurred.

The category "accidents" includes serious troubles such as fire, grounding, collision, the possibility of sinking, an emergency button abnormality, the possibility of drifting, inability to make headway under the boat's own power, and inability to return to port under the boat's own power. The category "incident" includes events that could lead to serious trouble, such as insufficient cooling water, poor engine start-up, decreased engine power, engine overload, engine overheating, the possibility of the engine seizing, engine stalling at low speed, poor operation of marine gear, shafting abnormality, difficulty in stopping the engine, insufficient electrical charging, insufficient fuel, insufficient lubricating oil, and the approach of rough weather.

These diagnosis results are recorded in a diagnosis results file of storage means 15, along with a notification message and its number, or a notification and countermeasure message and its number. They are also displayed by display means 17. If the diagnosis result is that the parameters are normal, the data are displayed, and processing is performed for communication to shore terminal 2. If an accident has been diagnosed, an alarm is displayed and processing is carried out for communicating this to shore terminal 2. If an incident has been diagnosed, a message is displayed and processing is performed for communication to shore terminal 2.

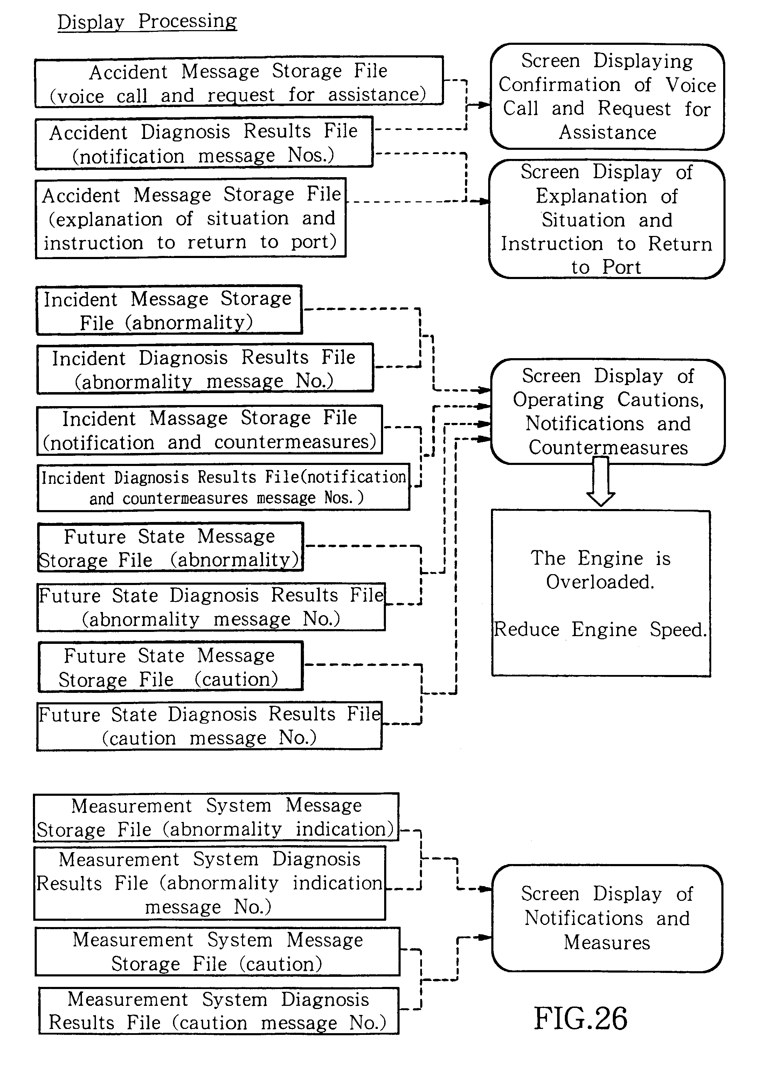

Fig. 26 is a flowchart showing the display processing in an embodiment of this invention. If an accident is diagnosed and its nature is such that rescue has to be requested, display means 17 reads the notification message number corresponding to the diagnosis content which has been recorded in the accident diagnosis results file, and also reads the message which has been stored in the accident message storage file (a voice request for rescue). Display means 17 also displays, as an alarm on terminal display unit 7, the fact that a condition has arisen in which a request for rescue should be made by a voice call, thereby prompting the skipper of the boat to request rescue immediately. If the nature of the accident requires a return to port, display means 17 reads the notification message number corresponding to the diagnosis content recorded in the accident diagnosis results file, and also reads the message which has been stored in the accident message storage file (an explanation of the situation and instruction to return to port). Display means 17 also displays, on terminal display unit 7, this explanation of the situation and the instruction to return to port.

If an incident has been diagnosed, display means 17 reads the incident diagnosis results file and the abnormality messages in the incident (abnormality) message storage file and, in accordance with the abnormality message number, displays an abnormality message such as "The engine is overloaded." It also reads the incident diagnosis results file and the notification and countermeasure messages in the incident (notification and countermeasures) message storage file and, in accordance with the notification and countermeasure message number, displays a notification and countermeasure message such as "Reduce engine speed."

At the same time, display means 17 reads the future state (abnormality) message storage file and the future state diagnosis results file, and in accordance with the abnormality message number, displays any messages relating to a future state. It also reads the future state (caution) message storage file and the future state diagnosis results file, and in accordance with the caution message number, displays any caution messages relating to a future state.

Display means 17 also reads the following other messages. Namely, it reads the measurement system (abnormality indication) message storage file and the measurement system diagnosis results file, and if there is an abnormality in the measurement system, displays suggested responses. At the same time, it reads the measurement system (caution) message storage file and the measurement system diagnosis results file, and in accordance with the caution message numbers, displays any cautions for responding to the measurement system which is in an abnormal state.

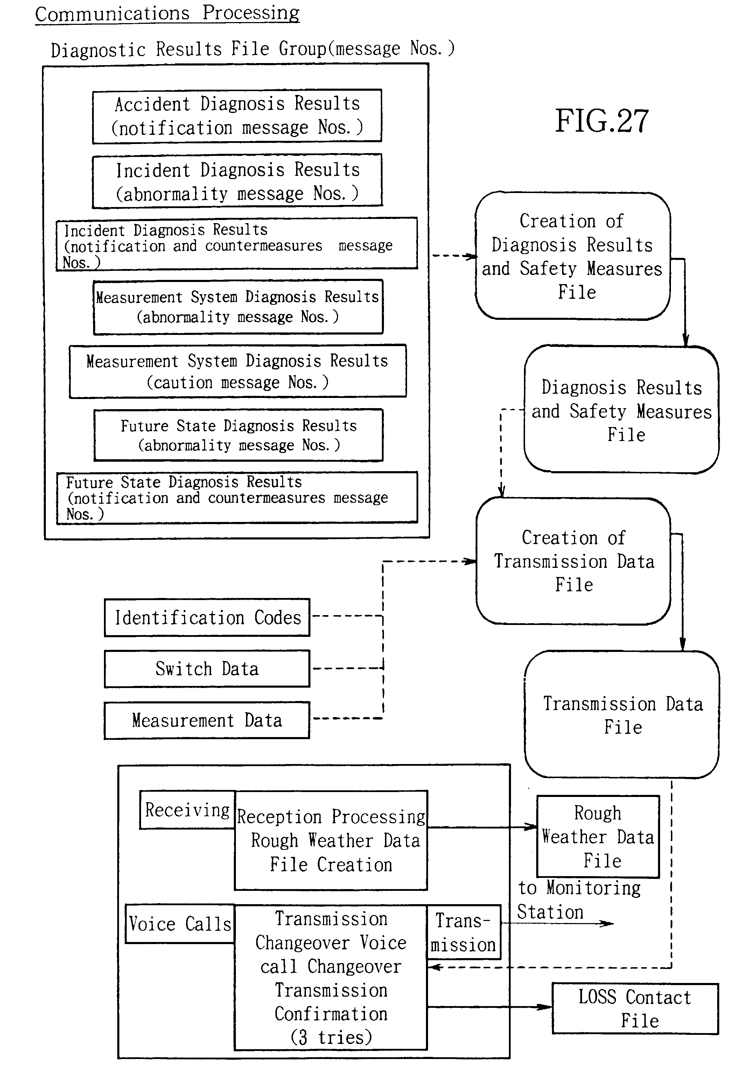

When such display processing is performed, it is followed by communications processing, after which the various kinds of data and messages are transmitted to shore terminal 2. Fig. 27 is a flowchart showing the communications processing in an embodiment of this invention.

The communications processing involves creation of various files. Namely, a diagnosis results and safety measures file is created from the diagnosis results file group, the identification codes, the switch data, and the measurement data. The diagnosis results file group comprises: notification messages based on the accident diagnosis results; abnormality messages, and notification and countermeasure messages, based on the incident diagnosis results; abnormality messages and caution messages based on the measurement system diagnosis results; and abnormality messages, and notification and countermeasure messages, based on the future state diagnosis results. A transmission data file is created on the basis of this diagnosis results and safety measures file, whereupon data are transmitted to shore terminal 2. In addition, any rough weather data received is processed and a rough weather data file is created.

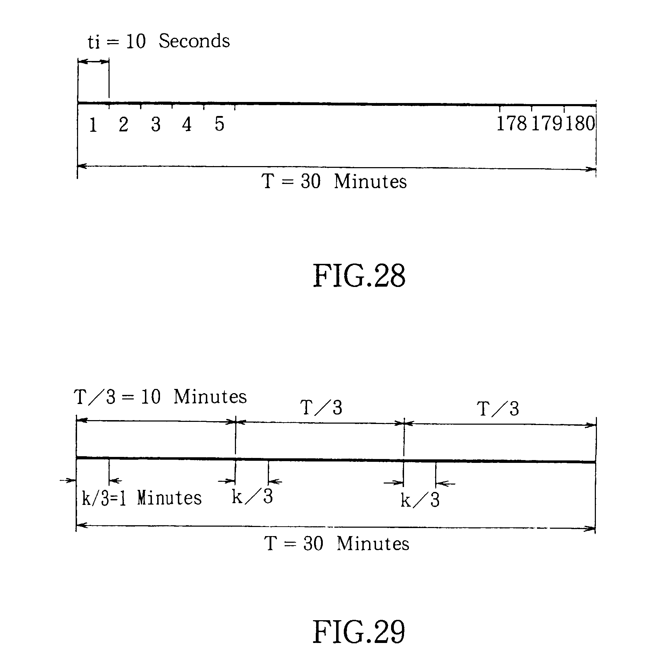

The timing of data transmission to shore terminal 2 is synchronized with the timing of reception by shore terminal 2, and transmission from each boat is fixed so that it does not occupy the same time slot. Fig. 28 gives an example of the transmission timing of shipboard terminals in an embodiment of this invention.

In this example, transmission from a given boat is performed once in T minutes (30 minutes). Assuming that there are 180 boats, the transmission time allocated to one boat, tᵢ, is 10 seconds. A 10 second interval is therefore pre-allocated to each boat as its communication time, and this is written in advance to a timing file. By thus establishing a characteristic transmission time for each boat, overlapping of transmissions from different boats can be avoided.

Now, if a boat is moored or has been brought up onto land, the engine will not be running, and in general a boat engine is started at an unspecified time, when someone decides to use the boat. It is therefore impossible to utilize engine start-up for control timing. On the other hand, because data required for maintenance management is included in the engine start-up data, shore terminal 2 can rapidly acquire the necessary data.

Accordingly, by setting a specific time interval of k minutes in distributed fashion within the T minutes and arranging for engine start-up data to be transmitted during this specific time interval, this data can be transmitted with the minimum lag once the engine has started. Fig. 29 gives an example of the arrangement of these specific time intervals. In this example, T is equal to 30 minutes and k has been set to 3 minutes, but split into three portions. One minute in every 10 minutes therefore constitutes the specific time interval. By thus arranging the specific time interval in distributed fashion, the nearest specific time interval after engine start-up can be utilized and the start-up data can be transmitted with at most a 10-minute lag. This specific time interval can also be used for tracking a boat after an accident or breakdown has occurred, or when it has been decided there is a high likelihood of accident or breakdown occurring and a return to port instruction has been given.

Under normal conditions, when a boat is under way in or out of a harbor, data are sent from shipboard terminal 1 to shore terminal 2 once every hour irrespective of whether the engine is running or is stopped. If there is a high likelihood of minor trouble, data are sent once every 30 minutes irrespective of whether the engine is operating or not. If there is a high likelihood of an accident or breakdown, or if an accident or breakdown has occurred, data are sent once every 10 minutes.

However, when an accident occurs data has to be transmitted as a matter of urgency, and therefore when an alarm is displayed, in order to transmit the required data irrespective of the allocated transmission time, shipboard terminal 1 automatically changes over to voice service and can use an emergency telephone number to call shore terminal 2 via the portable phone network.

Data transmission from shipboard terminal 1 to shore terminal 2 is implemented using a transmitted data format. An example of this is given in Table 3.

**Table 3**

| order | item | bytes |
|---|---|---|
| 1 | transmission start code and ID number | 4 |
| 2 | boat, engine and activity area identification codes | 10 |
| 3 | measured data and switch data | 10 |
| 4 | diagnostic results | 8 |
| 5 | responses to diagnostic results indicated by shipboard terminal and by monitoring station | 20 |
| 6 | accumulated engine operating time | 6 |
| 7 | accumulated voyage distance | 6 |
| 8 | GPS data (time, position, speed) | 22 |
| 9 | calibrated measurement data | 51 |
| 10 | calibrated switch data | 5 |
| 11 | transmission end identification code | 3 |

These data items are represented using prearranged codes and numbers.

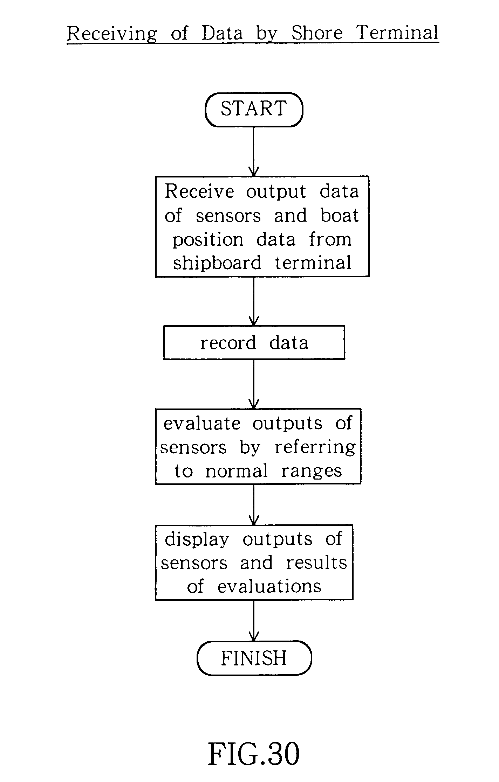

An explanation will now be given of the operation of shore terminal 2. Fig. 30 is a flowchart of data reception by a shore terminal in an embodiment of this invention.

Communication means 24 of shore terminal 2 receives output data from each sensor plus boat position data, all of which have been transmitted from shipboard terminal 1 via ordinary portable phone network 5 and public switched telephone network 6. The received data are recorded in storage means 23. Next, evaluation means 27 evaluates the recorded sensor outputs in accordance with the type of boat in question by referring to maps (of normal ranges) that have been recorded in storage means 23. It displays the received sensor outputs on display means 28, along with their evaluations.

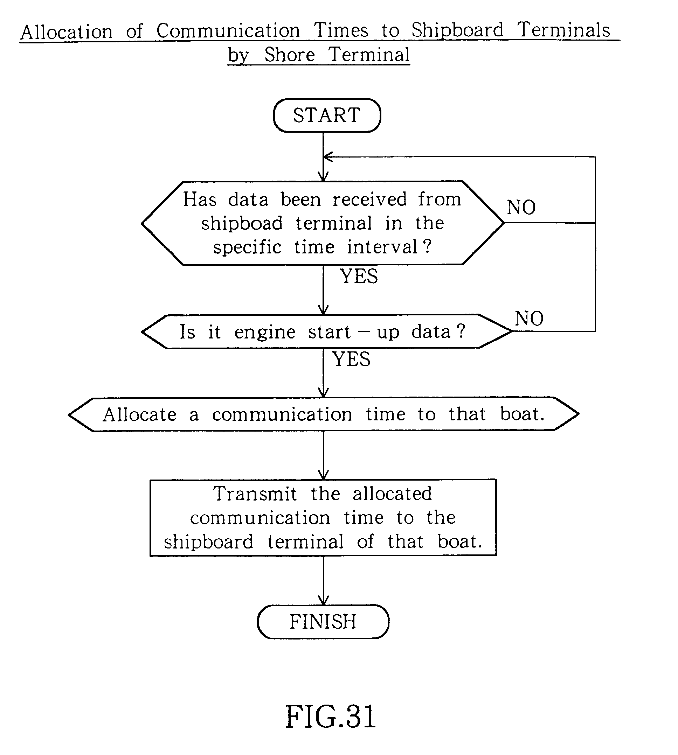

Fig. 31 is a flowchart showing the allocation of communication times to shipboard terminals by a shore terminal in an embodiment of this invention.

If data receiving means 22 of shore terminal 2 receives data, via communication means 24, from shipboard terminal 1 during the specific time interval described above, it decides whether or not these data are engine start-up data. If they are engine start-up data, communication time allocation means 25 and GPS output collecting means 40, this latter serving to collect the time data contained in the GPS output, allocate a communication time interval to the boat in question, and communication time transmission means 26 transmits the allocated communication time to shipboard terminal 1 of that boat.

Shipboard terminal 1 to which a communication time has been transmitted automatically holds this communication time until the boat's engine is stopped, and during each of these communication time intervals transmits sensor output data and GPS output data to shore terminal 2.

As has been explained in the foregoing, by installing logic software according to this invention in a personal computer of a shipboard terminal according to this invention, the state of a boat's engine is automatically and periodically detected by a plurality of sensors, each of the detected sensor outputs is automatically compared with its normal range, and when an abnormal state arises an alarm is displayed in the boat's cockpit or wheelhouse. As a result, each boat operating this system can rapidly be advised of what measures should be taken to deal with the situation. This invention therefore amply supports the safe operation of small leisure craft or coastal fishing boats of up to several tens of tons which are operated by crew with little knowledge or experience of marine engines.

This invention can therefore promote the use of small leisure craft and rationalize the management of marinas. Because a land portable phone network and the public switched telephone network are utilized for communication means, neither a radio station license nor a radio operator's certificate is required. Because a simple to operate radio communication system is employed, the system provided by this invention can be utilized more widely.

## Claims

1. A monitoring system for boats characterized in that it comprises shipboard terminals provided on a plurality of respective boats and one fixed shore terminal; wherein
each shipboard terminal comprises: means for collecting the outputs of a plurality of sensors which detect the state of the boat's engine, and the output of a GPS unit carried on that boat; storage means in which the normal ranges of outputs of said plurality of sensors are recorded; logic means for periodically comparing the output of the sensors with the normal ranges recorded in the storage means; display means for displaying an alarm in the boat's cockpit or wheelhouse when the output of a sensor exceeds the normal range; and communication means which, at each communication time allocated to the boat in question in accordance with time data contained in the GPS output, automatically transmits data comprising at least some of the outputs of the aforementioned plurality of sensors, plus position data output by the GPS, to the aforementioned shore terminal via a land portable phone network; and wherein
the shore terminal comprises means for automatically receiving, recording and displaying data arriving from the aforementioned shipboard terminal via the public switched telephone network.

2. A monitoring system for boats according to claim 1, wherein the shipboard terminal comprises means which, at a communication time allocated, after the boat's engine has been started, in accordance with time data contained in the GPS output, automatically transmits data comprising at least some of the plurality of sensor outputs plus position data output by the GPS, to the shore terminal via the aforementioned portable phone network.

3. A monitoring system for boats according to claim 2, wherein the allocated communication time is determined by using a standard time derived from time data contained in the GPS output as the starting point, dividing a time interval of T minus k minutes into n equal parts, and allocating the resulting time intervals (t₁, t₂, t₃, ..., tₙ) to respective boats, where the time interval of k minutes is a specific time interval for transmission of data after engine start-up.

4. A monitoring system for boats according to claim 3, wherein:
the shore terminal comprises means which, having received a transmission addressed to itself from the shipboard terminal of a given boat during an aforementioned specific time interval (of k minutes) after the engine of that boat has been started, allocates a communication time to that boat, and means for transmitting this communication time to the shipboard terminal of the boat in question; and
the shipboard terminal, which receives the transmission of this communication time, comprises means which automatically holds this communication time in the shipboard terminal until the boat's engine is stopped.

5. A monitoring system for boats according to claim 3, wherein the aforementioned specific time interval is distributed over the time interval of T minutes.

6. A system according to any of the preceding claims, wherein the shipboard terminal comprises means which, when the aforementioned alarm has been displayed, automatically uses an emergency telephone number to transmit to the shore terminal, via the portable phone network, data comprising at least some of the plurality of sensor outputs, irrespective of the communication time which has been allocated.

7. A system according to any of the preceding claims, wherein the shore terminal comprises: storage means in which are recorded the normal ranges of the sensor outputs for a plurality of boat types; means which evaluates the received sensor outputs by referring, in accordance with the type of boat in question, to the recorded normal range data; and means which displays the received sensor outputs along with their evaluation.

8. A machine readable recording medium on which is recorded logic software which collects the outputs of the plurality of sensors which detect the state of the boat's engine, and the output of a GPS unit carried on that boat; periodically compares the outputs of this plurality of sensors with their recorded normal ranges; outputs an alarm when a normal range is exceeded; and at each communication time allocated to the boat in question in accordance with time data contained in the GPS output, automatically seizes a portable phone channel and transmits data comprising at least some of the outputs of the plurality of sensors, plus position data output by the GPS, to the shore terminal on land.

9. A machine readable recording medium according to claim 8, on which is recorded logic software which automatically seizes a portable phone channel and transmits, to the shore terminal, data comprising at least some of the outputs of the plurality of sensors which detect the engine condition, plus position data output by the GPS unit, this data being transmitted at a communication time allocated, after the boat's engine has been started, in accordance with time data contained in the GPS output.

10. A machine readable recording medium according to claim 9, wherein the allocated communication time is determined by using a standard time derived from time data contained in the GPS output as the starting point, dividing a time interval of T minus k minutes into n equal parts, and allocating the resulting time intervals (t₁, t₂, t₃, ..., tₙ) to respective boats, where the time interval of k minutes is a specific time interval for transmission of data after engine start-up.

11. A machine readable recording medium according to claim 10, on which is recorded logic software which, having received a communication time allocated in response to a previous transmission to the shore terminal during a specific time interval and after the engine of the boat in question was started, automatically maintains this communication time until the boat's engine is stopped.

12. A medium according to claim 10 or claim 11, on which is recorded logic software which, when an alarm output has been generated, automatically uses an emergency telephone number to transmit to the shore terminal, via the portable phone network, data comprising at least some of the plurality of sensor outputs, irrespective of the communication time which has been allocated.
